# FASCICULE DE BREVET EUROPEEN

(11) **EP 3 211 267 B1**
(45) Date de publication et mention de la délivrance du brevet: **01.03.2023**
(21) Numéro de dépôt: 17152749.2
(22) Date de dépôt: 24.01.2017
(51) Int. Cl.: A63B 29/02, F16C 11/04, F16G 15/08, A62B 35/00

(54) **LONGE D'ASSURAGE ÉQUIPÉE D'UN ÉMERILLON PERFECTIONNÉ**
SICHERUNGSLEINE MIT EINEM VERBESSERTEN DREHWIRBEL
SAFETY LANYARD WITH AN IMPROVED SWIVEL

(30) Priorité: 29.02.2016 FR 1651671
(43) Date de publication de la demande: 30.08.2017
(73) Titulaire: Zedel, 38920 Crolles (FR)
(72) Inventeur: BONNET, Guillaume, 38330 Montbonnot (FR); HEDE, Jean-Marc, 38420 Domène (FR)
(74) Mandataire: Talbot, Alexandre

(56) Documents cités:
- US-A- 1 537 785
- US-A- 2 438 548
- US-A1- 2003 155 177

## Description

### Domaine technique de l'invention

L'invention concerne une longe ayant au moins une sangle ou corde en liaison avec un émerillon, lequel comporte une première et une deuxième pièces d'assemblage pouvant tourner l'une par rapport à l'autre selon un mouvement relatif de rotation, les deux pièces d'assemblage de formes tubulaires étant emboîtables coaxialement l'une dans l'autre, la première pièce externe étant de diamètre supérieur à celui de la deuxième pièce interne.

### Etat de la technique

Les émerillons existants utilisent une goupille ou un rivet pour maintenir les deux parties rotatives l'une par rapport à l'autre. De tels émerillons de l'art antérieur sont décrits à titre d'exemple dans les documents EP 2878855, US 1537785, et US 2438548. L'emploi de ce type d'émerillon pour une longe de via ferrata est bien sûr possible, mais au détriment du poids et du coût de fabrication de l'ensemble de la longe. Le document US20030155177 divulgue une longe ayant deux sangles en liaison avec un anneau métallique.

### Objet de l'invention

L'objet de l'invention consiste à réaliser une longe de sécurité et de maintien, équipée d'un émerillon résistant, simple à assembler et ultra léger.

La longe selon l'invention qui est définie par les revendications annexées, comprend également les caractéristiques suivantes
- au moins une des pièces est pourvue d'une fente ou trou pour la mise en place de moyens de retenue formés par au moins une liaison souple en matière textile, apte à maintenir les deux pièces en rotation dans l'état emboîté,
- la deuxième pièce traverse avec jeu un premier orifice de la première pièce, et comprend un épaulement venant en engagement dans l'état emboîté contre une butée d'arrêt axiale de la première pièce, et
- la première pièce de l'émerillon comportant un deuxième orifice à travers lequel passe la deuxième pièce dans l'état emboîté.

Selon un mode de réalisation préférentiel non revendiqué la butée d'arrêt est agencée sur un rebord annulaire faisant saillie radialement vers l'intérieur de la première pièce. La résistance en traction entre les deux pièces de l'émerillon est assurée par la venue en engagement de l'épaulement contre la butée d'arrêt du rebord.

Dans le cas d'une longe double, chaque extrémité des deux sangles d'assurage traverse la fente correspondante de l'émerillon en formant une boucle, qui est cousue sur elle-même pour constituer lesdits moyens d'attache de la deuxième pièce.

Les sangles de la longe peuvent bien entendu être remplacées par des cordelettes. Elles servent de butées afin que les deux pièces d'assemblage ne puissent pas se désolidarisées l'une de l'autre. L'assemblage de la longe est simple, car il suffit de glisser les deux pièces de l'émerillon l'une dans l'autre, puis de coudre les extrémités des sangles ou cordelettes.

Préférentiellement, les deux pièces d'assemblage sont en matière métallique, et une rondelle est insérée entre les deux pièces en contact pour limiter l'effet de frottement lors du mouvement de rotation de l'émerillon.

L'invention s'applique à tout type de longes de via ferrata, spéléologie, travaux en hauteurs, et alpinisme.

### Description sommaire des dessins

D'autres avantages et caractéristiques ressortiront plus clairement de la description qui va suivre d'un mode de réalisation de l'invention donné à titre d'exemple non limitatif et représenté aux dessins annexés, dans lesquels :
- la figure 1 est une vue en perspective de la première partie externe de l'émerilon,
- la figure 2A montre une vue en coupe de la deuxième partie de l'émerillon,
- la figure 2B est une vue en coupe des deux parties de l'émerillon avant assemblage,

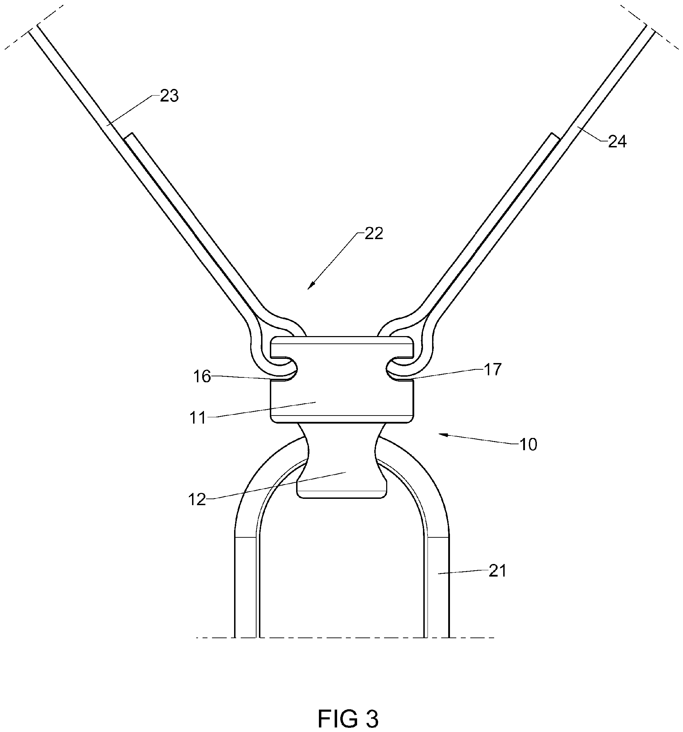

- la figure 3 représente une vue en élévation d'une longe double équipée de l'émerillon de la figure 2B après assemblage,
- la figure 4 illustre une vue en perspective de la longe double avec l'émerillon connecté par un organe d'attache au baudrier de l'utilisateur,
- la figure 5 est une vue en coupe de la longe selon la figure 4,
- les figures 6 et 7 illustrent des vues en coupe de deux variantes de réalisation de la figure 5.

### Description détaillée de divers modes de réalisation

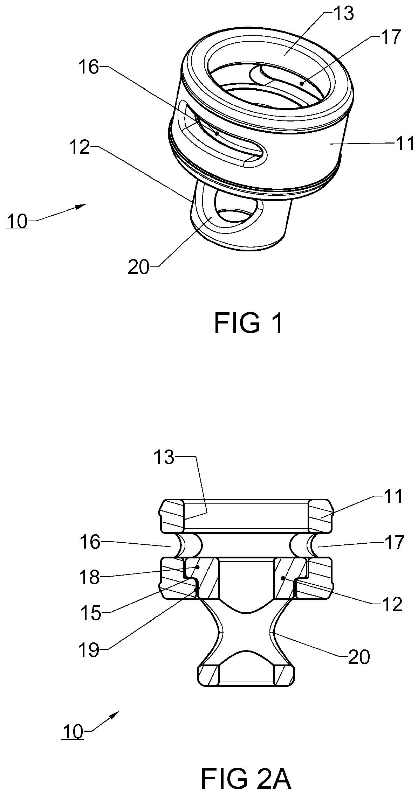

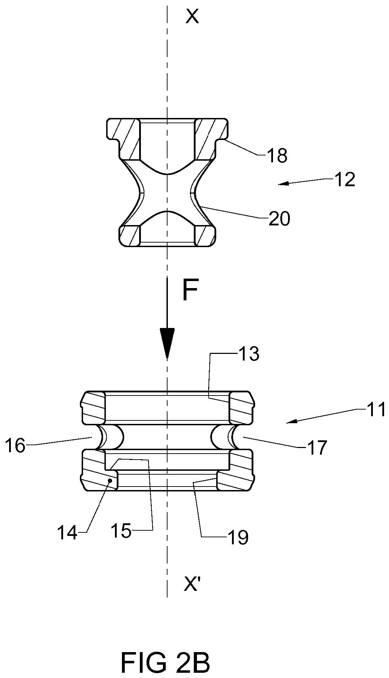

En référence aux figures 1, 2A et 2B, un émerillon, désigné par le repère général 10, est composé de deux pièces 11, 12 d'assemblage emboitables coaxialement l'une dans l'autre, et destinées après assemblage à tourner selon un mouvement relatif autour de l'axe longitudinal XX'. Les deux pièces 11, 12 sont réalisées de préférence en matière métallique.

La première pièce 11 externe présente une forme tubulaire ayant à l'extrémité supérieure un premier orifice 13 circulaire de réception par lequel est engagée la deuxième pièce 12 selon la flèche F (figure 2B). L'extrémité inférieure de la première pièce 11 comporte un deuxième orifice 19 débouchant délimité par un rebord 14 annulaire faisant saillie vers l'intérieur. La présence de ce rebord 14 constitue une butée 15 d'arrêt axial de la deuxième pièce 12 en fin de course d'assemblage.

La surface latérale cylindrique de la première pièce 11 comprend en plus deux fentes 16, 17 semi-circulaires diamétralement opposées, et situées à un même niveau entre les deux extrémités de la première pièce 11.

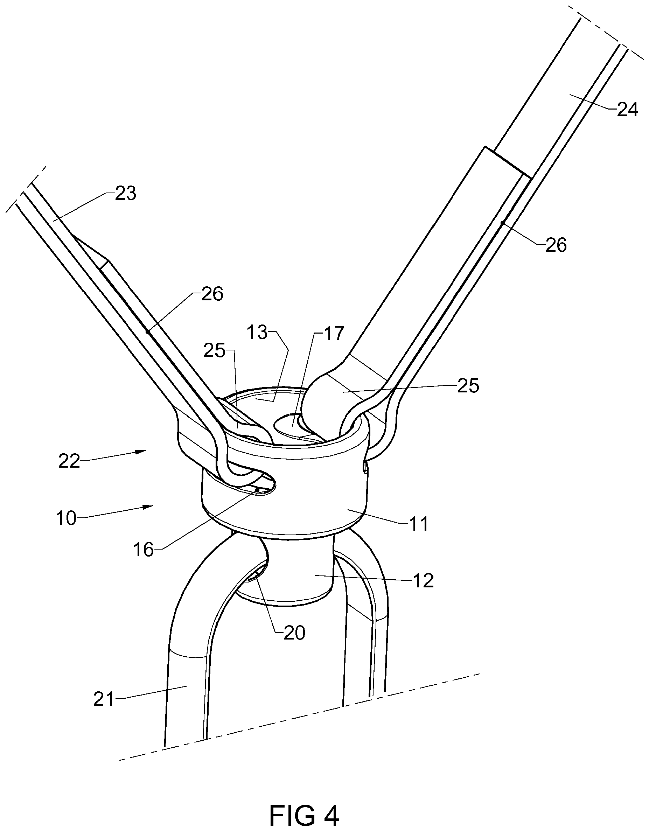

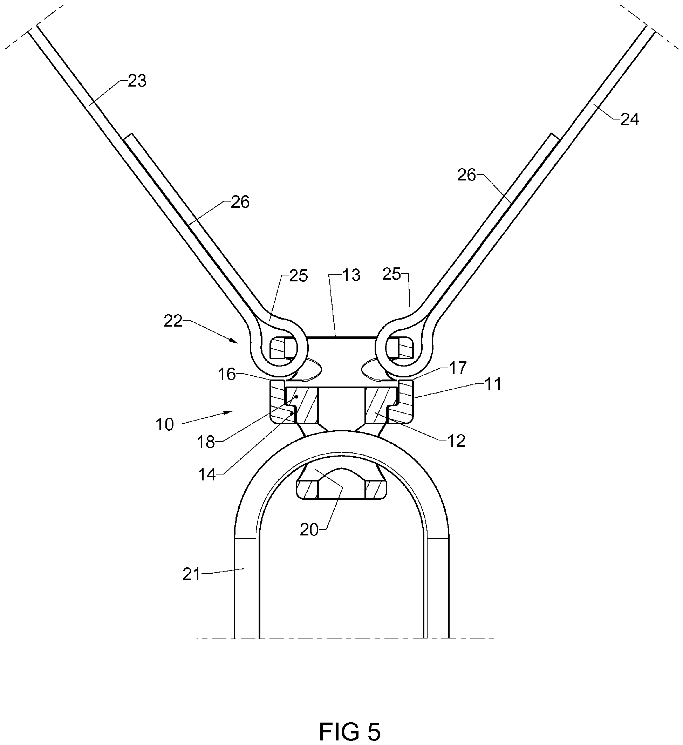

La deuxième pièce 12 interne est dotée d'un épaulement 18 radial et annulaire dont le diamètre est d'une part inférieur au diamètre interne du premier orifice 13, et d'autre part supérieur à celui du deuxième orifice 19 de la première pièce 11. Le reste du corps de la deuxième pièce 12 présente un diamètre inférieur à celui du deuxième orifice 18, pour autoriser le passage longitudinal à travers la première pièce 11 jusqu'à la venue en engagement de l'épaulement 18 contre la butée 15 d'arrêt (figure 2A). Dans cette position, la partie supérieure de la deuxième pièce 12 reste logée à l'intérieur de la première pièce 11, et la partie inférieure traverse complètement la première pièce 11 en faisant saillie du deuxième orifice 19. Cette partie inférieure en saillie de la deuxième pièce 12 est dotée d'un trou 20 transversal, lequel est accessible en position assemblée pour autoriser la mise en place d'un organe d'attache 21, par exemple un mousqueton ou autre connecteur (figures 4 et 5).

Pour assurer le maintien l'une dans l'autre des deux pièces 11, 12 dans l'état emboité autorisant leur mouvement relatif de rotation, des moyens de retenue 22 sont engagés dans les fentes 16, 17 de la première pièce 11, pour empêcher tout échappement axial de la deuxième pièce 12 par le haut. Ces moyens de retenue 22 peuvent être réalisés par une liaison souple ou élastique en matière textile, par exemple des sangles ou cordelette, ou par une liaison rigide métallique, par exemple un mousqueton.

Dans l'exemple de réalisation des figures 4 et 5, l'émerillon 10 selon l'invention est utilisé pour équiper une longe double, ayant deux sangles 23, 24 d'assurage (montrées partiellement). L'organe d'attache 21 de l'émerillon 10 est relié au baudrier (non représenté) de l'utilisateur. Chaque extrémité des sangles 23, 24 traverse la fente 16, 17 correspondante en l'entourant pour former une boucle 25 fermée qui est ensuite cousue sur elle-même par une couture 26. La présence des deux boucles 25 à l'intérieur de la première pièce 11 constitue les moyens de retenue 22 de la deuxième pièce 12. Cette dernière peut alors tourner en rotation dans l'état emboîté, mais reste prisonnière à l'intérieur de la première pièce 11.

L'assemblage d'une telle longe double avec l'émerillon 10 des figures 4 et 5, est simplifié :
Il suffit d'emboîter la deuxième pièce 12 dans la première pièce 11, puis de coudre les deux extrémités des sangles 23, 24 après passage dans les fentes 16, 17. La résistance en traction entre les deux pièces 11, 12 de l'émerillon 10 est assurée par la venue en engagement de l'épaulement 18 contre la butée d'arrêt 15 du rebord 14.

Selon une variante de réalisation (non représentée), une rondelle peut être insérée entre les deux pièces 11, 12 en contact pour limiter l'effet de frottement lors du mouvement de rotation.

Selon un autre exemple non revendiqué, la deuxième pièce 12 est configurée pour être insérable ou démontable uniquement dans une position angulaire prédéterminée par rapport à la première pièce 11.

Tout autre type de longe, à une ou plusieurs sangles d'assurage, peut être associé à l'émerillon 10 selon l'invention. Les boucles cousues des sangles 23, 24 constituant les moyens de retenue 22 des figures 4 et 5, peuvent être remplacées par un simple anneau textile traversant les fentes 16, 17. L'anneau sert alors de butée, et de moyen d'accrochage de la ou des sangles.

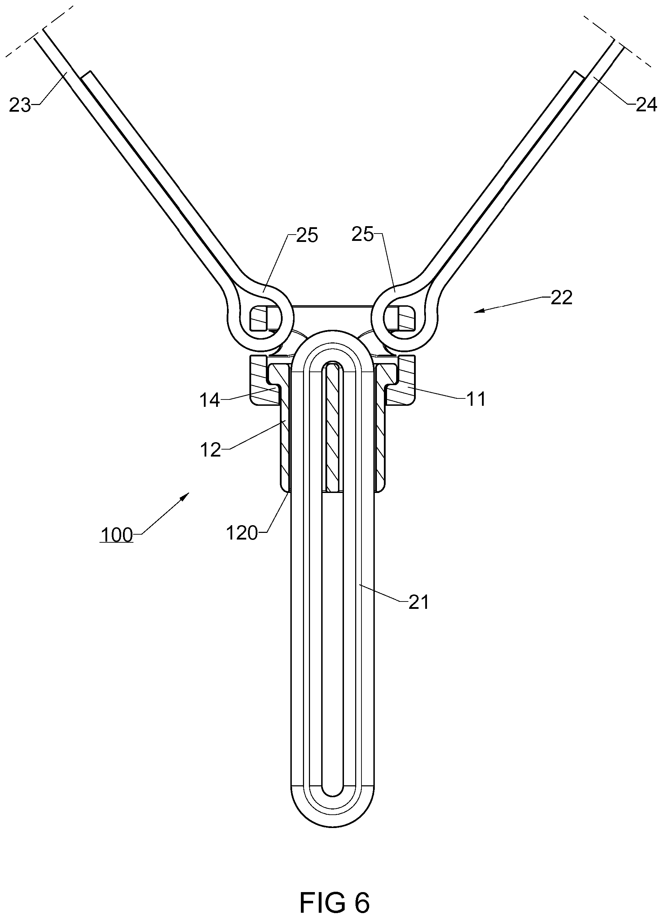

Selon la variante de la figure 6, l'émerillon 100 est similaire à celui de la figure 5, avec les boucles 25 cousues des sangles 23, 24 de la longe double qui servent de moyens de retenue des deux pièces de l'émerillon. L'organe d'attache 21 est formé par un anneau textile de forma aplatie, traversant un trou 121 axial de la deuxième pièce 12.

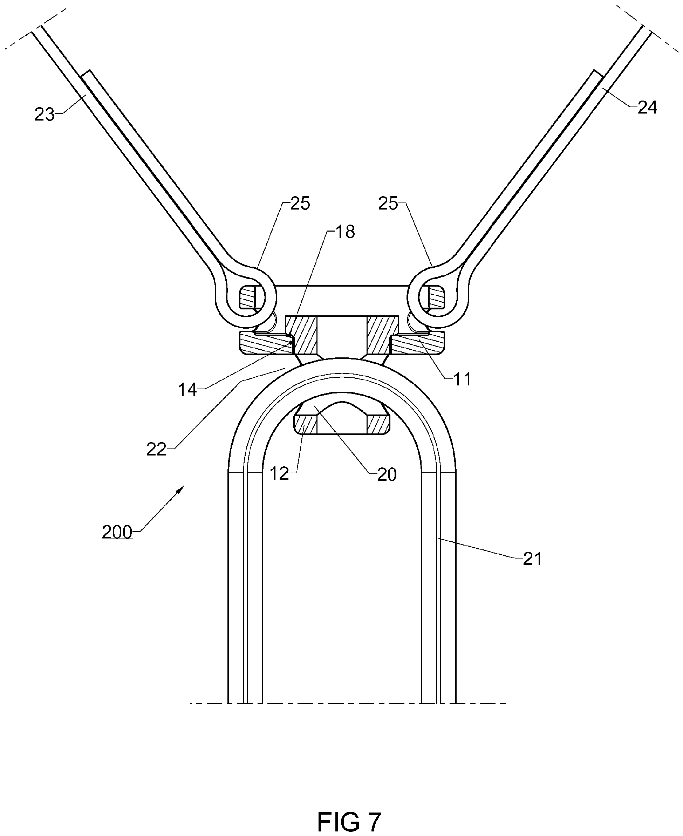

Sur la variante de la figure 7, les moyens de retenue 22 de l'émerillon 200 sont formés par l'anneau de sangle de l'organe d'attache 21, qui passe dans un trou 20 transversal de la deuxième pièce 12. L'épaulement 18 de cette dernière reste en appui sur le rebord 14 de la première pièce 11.

## Revendications

1. Longe ayant au moins deux sangles ou cordes (23, 24) **caractérisée en ce que** la longe est en liaison avec un émerillon (10, 100, 200), lequel comporte une première et une deuxième pièces (11, 12) d'assemblage pouvant tourner l'une par rapport à l'autre selon un mouvement relatif de rotation, les deux pièces (11, 12) d'assemblage de formes tubulaires étant emboîtables coaxialement l'une dans l'autre, la première pièce (11) externe étant de diamètre supérieur à celui de la deuxième pièce (12) interne,
où :
- la première pièce (11) est pourvue de deux fentes ou trous (16, 17) pour la mise en place de moyens de retenue (22) formés par au moins une liaison souple en matière textile, apte à maintenir les deux pièces (11, 12) en rotation dans l'état emboîté,
- chaque extrémité des sangles (23, 24) traverse une des deux fentes (16, 17), et
- la deuxième pièce (12) traverse avec jeu un premier orifice (13) de la première pièce (11), et comprend un épaulement (18) venant en engagement dans l'état emboîté contre une butée d'arrêt (15) axiale de la première pièce (11),
- la première pièce (11) de l'émerillon comportant un deuxième orifice (19) à travers lequel passe la deuxième pièce (12) dans l'état emboîté.

2. Longe selon la revendication 1, **caractérisée en ce que** la butée d'arrêt (15) est agencée sur un rebord (14) annulaire faisant saillie radialement vers l'intérieur de la première pièce (11), la résistance en traction entre les deux pièces (11, 12) de l'émerillon (10, 100, 200) étant assurée par la venue en engagement de l'épaulement (18) contre la butée d'arrêt (15) du rebord (14).

3. Longe selon la revendication 1, **caractérisée en ce que** chaque extrémité des deux sangles (23, 24) forme une boucle cousue sur elle-même pour constituer lesdits moyens de retenue (22) de la deuxième pièce (12) de l'émerillon (10, 100).

4. Longe selon la revendication 3, **caractérisée en ce que** les moyens de retenue (22) de l'émerillon (200) comportent en plus l'anneau de sangle de l'organe d'attache (21), qui passe dans un trou (20) transversal de la deuxième pièce (12).

5. Longe selon l'une des revendications précédentes, **caractérisée en ce que** les deux pièces (11, 12) d'assemblage sont en matière métallique, et qu'une rondelle est insérée entre les deux pièces (11, 12) en contact pour limiter l'effet de frottement lors du mouvement de rotation.

## Patentansprüche

1. Sicherungsleine mit mindestens zwei Gurten oder Seilen (23, 24), **dadurch gekennzeichnet, dass** die Sicherungsleine mit einem Drehwirbel (10, 100, 200) in Verbindung steht, der ein erstes und ein zweites Stück (11, 12) zum Zusammenfügen aufweist, welche eine relative Drehbewegung gegeneinander ausführen können, wobei die beiden röhrenförmigen Zusammenfügungsstücke (11, 12) koaxial ineinandergesteckt werden können, wobei das außenliegende erste Stück (11) einen Durchmesser hat, der größer als derjenige des innenliegenden zweiten Stücks (12) ist, wobei:
- das erste Stück (11) mit zwei Spalten oder Löchern (16, 17) versehen ist, um Rückhaltemittel (22) anzubringen, die aus mindestens einem nachgiebigen Bindeelement aus Textilstoff bestehen, das dazu befähigt ist, die beiden Stücke (11, 12) im ineinandergesteckten Zustand in Drehbewegung zu halten,
- jedes der Enden der Gurte (23, 24) sich durch einen der beiden Spalte (16, 17) erstreckt, und
- das zweite Stück (12) sich derart durch eine erste Öffnung (13) des ersten Stücks (11) erstreckt, dass es Spiel hat, und einen Ansatz (18) umfasst, der im ineinandergesteckten Zustand einen axialen Anschlag (15) des ersten Stücks (11) hintergreift,
- das erste Stück (11) des Drehwirbels eine zweite Öffnung (19) aufweist, durch welche sich das zweite Stück (12) im ineinandergesteckten Zustand erstreckt.

2. Sicherungsleine nach Anspruch 1, **dadurch gekennzeichnet, dass** der Anschlag (15) an einem ringförmigen Rand (14) angeordnet ist, der radial ins Innere des ersten Stücks (11) ragt, wobei der Zugwiderstand zwischen den beiden Stücken (11, 12) des Drehwirbels (10, 100, 200) dadurch sichergestellt wird, dass der Ansatz (18) den Anschlag (15) des Randes (14) hintergreift.

3. Sicherungsleine nach Anspruch 1, **dadurch gekennzeichnet, dass** jedes der Enden der beiden Gurte (23, 24) eine auf sich selbst umgenähte Schleife bildet, um die Rückhaltemittel (22) des zweiten Stücks (12) des Drehwirbels (10, 100) zu bilden.

4. Sicherungsleine nach Anspruch 3, **dadurch gekennzeichnet, dass** die Rückhaltemittel (22) des Drehwirbels (200) darüber hinaus den Gurtring des Befestigungsorgans (21) aufweisen, welcher sich durch ein quergerichtetes Loch des zweiten Stücks (12) erstreckt.

5. Sicherungsleine nach einem der vorhergehenden Ansprüche, **dadurch gekennzeichnet, dass** die beiden Stücke (11, 12) zum Zusammenfügen aus metallischem Material sind und dass eine Ringscheibe zwischen den beiden in Kontakt befindlichen Stücken (11, 12) eingefügt ist, um die Reibwirkung bei der Drehbewegung zu begrenzen.

## Claims

1. Lanyard having at least two straps or ropes (23, 24), **characterized in that** the lanyard is linked to a swivel (10, 100, 200), which comprises a first and a second assembly parts (11, 12) able to rotate with respect to one another with a relative movement of rotation, the two tubular-shaped assembly parts (11, 12) being able to be coaxially nested in one another, the outer first part (11) having a larger diameter than that of the inner second part (12),
wherein:
- the first part (11) is provided with two slots or holes (16, 17) for fitting securing means (22) formed by at least one flexible link made from textile material, designed to secure the two parts (11, 12) in rotation in the nested state,
- each end of the straps (23, 24) passes through one of the two slots (16, 17), and
- the second part (12) passes with clearance through a first opening (13) of the first part (11), and comprises a rim (18) coming into engagement in the nested state against an axial end stop (15) of the first part (11),
- the first part (11) of the swivel comprising a second opening (19) through which the second part (12) passes in the nested state.

2. Lanyard according to claim 1, **characterized in that** the end stop (15) is arranged on an annular ledge (14) radially salient towards the inside of the first part (11), the tensile strength between the two parts (11, 12) of the swivel (10, 100, 200) being ensured by the coming into engagement of the rim (18) against the end stop (15) of the ledge (14).

3. Lanyard (10) according to claim 1, **characterized in that** each end of the two straps (23, 24) forms a loop sewn onto itself to constitute said securing means (22) of the second part (12) of the swivel (10, 100).

4. Lanyard (10) according to claim 3, **characterized in that** the securing means (22) of the swivel (200) further comprise the strap ring of the securing part (21), which passes through a transverse hole (20) of the second part (12).

5. Lanyard (10) according to one of the foregoing claims, **characterized in that** the two assembly parts (11, 12) are made from metallic material, and that a washer is inserted between the two parts (11, 12) in contact to limit the friction effect during the movement of rotation.
